# EUROPEAN PATENT SPECIFICATION

(11) **EP 0 813 818 B1**
(45) Date of publication and mention of the grant of the patent: **17.07.2002**
(21) Application number: 97201148.0
(22) Date of filing: 18.04.1997
(51) Int. Cl.: A23L 1/00, A23C 19/09, A23P 1/08, B65D 85/76

(54) **Processed cheese snack**
Schmelzkäseimbiss
Snack du fromage fondu

(30) Priority: 17.06.1996 EP 96304492
(43) Date of publication of application: 29.12.1997
(73) Proprietor: UNILEVER N.V., 3000 DK Rotterdam (NL); UNILEVER PLC, London EC4P 4BQ (GB)
(72) Inventor: Blandin, Helene, British Creameries Ltd, Nr. Skipton, North Yorkshire BD23 3UE (GB); Perrett, Malcolm, Purfleet, Essex, RM16 1SD (GB)
(74) Representative: Joppe, Hermina L. P.

(56) References cited:
- EP-A- 0 148 079
- EP-A- 0 710 443
- DE-A- 3 532 283
- FR-A- 2 609 871

## Description

Snack products are becoming increasingly popular. Their consumption is no longer confined to use as an aside to a drink, they are also taken e.g. as part of a lunch packet. For such use, it can be desirable for individual snacks to have at least some sort of protective cover or packaging. Such protective cover should then be easily removable. Although cheese such as Cheddar, Gouda, Emmental etc. is very popular, it is not often consumed as such as a snack. More commonly cheese snacks combine cheese or cheese based creme with cereal products, e.g. biscuits or wafers. A reason for this is that cheese eaten as such tends to be rather sticky and thick in the mouth which is not appreciated by many consumers. Processed cheese often is even more cloying than conventional cheese.

We have now found that processed cheese snacks can be made which are not thick and sticky in the mouth and which have a sort of protective cover that is easily removable.

Accordingly, the invention provides a processed cheese snack product in a moisture permeable casing which subsequent to filling of processed cheese mass into the casing has been dried to cause a weight loss of the processed cheese mass of 1-25%.

We found that such drying not only causes a change throughout the body of the processed cheese such that its cloying nature largely disappears, it also creates a sort of skin on the product which causes a variation of texture through the product, which makes the product surprising to bite in and gives it an interesting mouthfeel.

Whereas the casing initially serves as a sort of mould to give shape to the processed cheese mass.

Usually from products in casings, e.g. meat sausages, the casing is difficult to remove. An advantage of the present invention is that the drying causes a shrinkage of the processed cheese. As a result the casing fits loosely around the snack and it can easily be stripped off or otherwise removed from the edible portion of the product. The skin formation caused by the drying contributes to making the casing easily removable.

To allow the product to be produced, the casing must be moisture permeable. Conventional plastic casings are normally not moisture permeable and such casings cannot be used for the present invention.

Preferably the product is prepared by a process comprising:
A. preparing a processed cheese mass
B. filling the processed cheese mass into moisture permeable casing and
C. drying the filled casing to cause a weight loss of the processed cheese mass of 1-25%.

Preferred embodiments of the present product and the present process are given in claims 2-7 and 9-12 respectively.

Preferably the casing is twist linking. Such casings, when twisted a few turns, stick together. Thus for example when making sausage-shaped snack product, one can use a long tubular casing, e.g. with a diameter of 0.5-2 cm. Filling is extruded into the casing. At distances of e.g. 4-20 cm, especially 4-15 cm. the filled casing is twisted a few turns around its axis. At the twisting points the casing can be cut through. When using twist linking casing, the casing will remain stuck together and the snack product is protected. Yet, the consumer wishing to eat the product can easily release the twist link manually without using scissors or a knife, and strip the casing from the snack.

Conventional plastic casings are generally not twist linking. To separate the sausages from each other, metal clips are then usually applied. To remove these clips to be able to eat the product, normally requires the use of e.g. a knife. Furthermore, people trying to remove the clip with their teeth may accidentally swallow the clip. Therefore, the use of twist linking casing is not only convenient for the consumer, it is also more safe. A particularly preferred casing that is both moisture permeable and twist linking is a cellulose casing.

In a preferred embodiment the snack product is a smoked snack product. Smoking can be done in a conventional manner e.g. as done for smoking fish. For example, smoking can be done by keeping the filled casings for an appropriate period of time, e.g. a few hours, in a smoking chamber, e.g. before and/or after the drying. Part or all of the smoking can also be done simultaneous with drying. If smoking is applied after filling the processed cheese mass in the casing which is preferred, the casing should be smoke permeable. The preferred cellulose casing described above, is smoke permeable.

An advantage of the present invention is that the product can have good keepability. It can easily be made to have ambient stability for several months. The drying contributes to improved keepability. If smoking is applied this too can have a positive influence. Furthermore we found that the present product, if so desired, can be post-pasteurised in its final packaging, e.g. at 75 °C for 20 - 40 minutes. Preferably, however, such post-pasteurisation is not applied. For good eating quality as well as good keepability, preferably the recipe of the processed cheese mass and the extent of drying are chosen such that the end product has a wateractivity Aw of 0.82-0.96, more preferably of 0.86-0.94 especially of 0.88-0.92.

The degree of drying preferably is chosen such that the weight loss of the starting processed cheese mass is 1-25%, preferably 2-20%, more preferably 3-17% most preferably 3-15%. The drying can suitably be done in a drying chamber. The degree of drying obtained depends on the shape and size of the snack product, and the temperature, relative humidity, air circulation and duration of the drying. The temperature is preferably chosen at at least about 18°C. To get optimal benefit from the invention, the drying is preferably done at a temperature sufficiently low to prevent the processed cheese from loosing its shape. The processed cheese would typically show considerable melting at temperatures in the range of about 55°C or above. Therefore, the drying temperature is preferably not higher than about 50°C. More preferably the drying temperature is in the range of 20-40°C.

The shape of the snack product preferably is elongated, sausage shape being particularly preferred. The size of the snack product preferably is 5 - 35 g, especially 10 - 25 g. Both the elongated shape and the relatively small size give the product a relatively high surface/content ratio. This allows obtaining the desired degree of drying relatively quickly. A further benefit of this shape and size is that the variation in texture of the product going from the surface to the interior, because of the skin formation obtained by the drying, as perceived, is more pronounced than in case a size and shape were chosen that resulted in a lower surface/content ratio. We obtained optimal results with sausage shaped snack product with a diameter of 0.7-1.5 cm and a length of 5-20 cm.

In another embodiment the filled casing, prior to drying, is subjected to a surface acid treatment, preferably by submerging the filled casing in an acid bath. Such treatment strengthens the skin formation and thus enhances the texture difference between the surface layer and the interiour of the product. Suitably such an acid bath is a lactic acid solution with pH in the range of e.g. 2-3. Keeping the filled casings e.g. 2 minutes in such a bath is usually adequate to give the desired effect.

We do not wish to be bound by theory but we believe that the skin in the present product is caused by denaturation of protein in the surface layer of the product, caused by the drying, and if applied, the acid.

The processed cheese mass can be prepared as conventionally done, e.g. as described in F. Kosikowski, Cheese and Fermented milk foods, Edwards Brothers, Ann Arbor, Michigan, USA, 1966, pp 290-303 and Processed Cheese Manufacture, A Joha guide, BK Ladenburg, Germany, 1989.

By processed cheese is meant block-type processed cheese. Some authors encompass within "processed cheese" also processed cheese spread. Recipes for such spread-type products are generally not appropriate for the present invention.

Preferably the composition employed to prepare the processed cheese mass consists predominantly of cheese. The composition will preferably contain apart from cheese, 1-5% more preferably 2-4% emulsifying salts, optionally up to 5% of cooking salt and spices, and optionally up to 5%, more preferably 0.2-3% of texture modifier, e.g. gum, starch, egg white powder, colouring agent or the like. Water may be incorporated, directly and/or indirectly from condensate used for heating. The amount of water that can thus be incorporated depends on the moisture content of the cheese employed, the extent of drying that will be applied on the end product and the properties of the end product desired, but preferably the amount of water incorporated should not exceed 20% and more preferably it is 5-15%. Preferably, the fat of the composition originates for 50-100% from cheese, more preferably it originates for 70-100% from cheese. But if so desired, other fat sources can be incorporate, e.g. butter, butterfat, cream, vegetable fat etc. Similarly, it is preferred for 50-100%, especially 70-100% of the protein to originate from cheese, but if so desired some protein from other sources e.g. caseinate or rennet casein can be incorporated. Incorporation of fat and protein not originating from cheese, in preparing block processed cheese, is well known in the art. Assuming that substantially no such other protein and fat sources than cheese are included, the amount of cheese in the recipe can still fluctuate corresponding to the fluctuations in the amount of water, but preferably it is 70-95%, more preferably it is 75-91%. If fat and/or protein possibly accompanied by water, e.g. in the case of cream, is or are incorporated from other sources than cheese, the above preferred recipe is adapted accordingly.

The overall recipe is preferably chosen such that the resulting processed cheese mass before drying has a dry matter content of 40-75%, preferably of 40-70%, more preferably of 50-70% and a fat in dry matter content of 30-70%, preferably of 40-65%.

As melting or emulsifying salts, commonly used compositions e.g. of phosphates and citrates can be used. We obtained particularly good results with polyphosphates, diphosphates, monocalcium phosphate and trisodium phosphate (E452, E450, E341 and E339, respectively) or mixtures thereof being particularly preferred.

Preferably a major portion of the cheese employed is renneted cheese, i.e. cheese during the preparation of which the coaqulation of protein was predominantly caused by the action of rennet or a similar enzyme rather than by the action of acid and/or heat. Preferably the renneted cheese is predominantly of the semi-hard or hard type.

Examples of such semi-hard or hard, renneted cheese are Cheddar, Gouda, Emmental, Edam, Parmesan, or Gruyere.

In a first embodiment, preferably 30-100% of the cheese employed is renneted cheese that has been ripened for at least 5 weeks. More preferably 50-100% of the cheese is semi-hard or hard renneted cheese that has been ripened for 5-20 weeks. In this first embodiment, more mature cheese, e.g. ripened for 30 weeks or more, is preferably not included at a level exceeding 20% of the cheese, more preferably its amount, if any, does not exceed 10%. This way, the resulting processed cheese will have a milder taste. The balance of the cheese can consist e.g. of unripened curd, preferably prepared by renneting but some acid and/or heat coagulated curd can be included as well, and/or only briefly ripened cheese.

In a second embodiment of the invention, the processed cheese is more mature and has a stronger taste. In this second embodiment, preferably 50-100% of the cheese is semi-hard or hard renneted cheese that has been ripened for 10-40 weeks, more preferably 50% of the cheese has ripened for 10 weeks and 50% of the cheese has ripened for 25 to 30 weeks.

The expression cheese encompasses products in which substantially all of the protein and fat originate from dairy milk as well as so-called cheese alternatives. In cheese alternatives part or all of the fat may be of non-dairy origin, e.g. it may be vegetable oil of fat, e.g., palm oil or a palm oil derivative, liquid vegetable oil e.g. sunflower oil, mixtures of palm-derived oil and liquid vegetable oil, etc. The advantage of such cheese alternative is that it can have noticeably reduced cholesterol contents, and that if an appreciable amount of liquid vegetable oil is employed, also its fatty acid composition can be nutritionally more attractive. Accordingly it is preferred for 20-80% of the fat of the cheese used for making the processed cheese mass is vegetable fat. The preparation of cheese alternatives for this purpose is well known in the art, and such cheese alternatives are available in the market. Complete replacement of the dairy fat is however not preferred for taste reasons. Similarly, part of the protein in cheese alternative may be from other origin than milk.

If so desired, other edible material not commonly employed in processed cheese may be incorporated in the present process and product, to obtain different taste and flavour profiles for the end product. For examples, pieces of nuts, meat, e.g. ham, vegetables e.g. bell pepper and/or herbs may be included. In such case, the above described recipe for the processed cheese mass is preferably employed in an amount of at least 80% with up to 20% of the other edible material to obtain the processed cheese mass for use in the present invention. In this embodiment preferably 85-98% of the above described processed cheese mass is combined with 2-15% of the other edible material. The other edible material can be combined with the processed cheese mass just before filling it into the casing or at an earlier stage of the preparation.

The product can for example be prepared in the following manner:
* Put all ingredients in e.g. a Stephan® cutter operating at e.g. 500 - 3000 rpm, heat with life steam to e.g. 90°C to get the desired texture and pasteurise the composition, as commonly done for block processed cheese production.
* Fill the composition into a cylindrical cellulose casing and apply twisting to obtain a chain of sausage shaped filled casings using a dosing pump/twister/linker, at a temperature of at least 70°C.
* If so desired, pass the chain of sausage shaped filled casings through a lactic acid bath (pH 2.5) with a residence time of 2 minutes.
* Put the chain of filled casings in a smoking/drying chamber at a temperature of 23-27°C, preferably 25°C for a period of 3-5 hours, while applying smoke during the first 3 hours of this period.
* Cut the chain of products into single units.
* Pass the products through a hot air tunnel at 85°C, within 6 seconds.
* Pack the products individually or in sets of e.g. 2 or 4 in outerpackaging, e.g. by flowrapping, e.g. applying an inert atmosphere of nitrogen and carbondioxide.
* Pack the products in outer boxes and store.

Upon completion of quality control measures, the product is then ready for shipping.

Throughout this specification all parts, proportions and percentages are by weight except where indicated otherwise.

### Examples 1-2

### Recipe (parts by weight):

| Example | 1 | 2 |
|---|---|---|
| Cheddar (10 weeks ripening) | 48.3 | 48.3 |
| Cheddar alternative (all milkfat replaced with vegetable oil comprising palm oil, 10 weeks ripening) | 48.3 | -- |
| Cheddar reduced fat alternative (containing only vegetable oil, comprising palm oil, 10 weeks ripening) | -- | 48.3 |
| Emulsifying salt | 3.4 | 3.4 |

Water is added on top to the above described mix in an amount of 10 parts by weight. The product was prepared by the method outlined above.

Results of analyses of the processed cheese mass and of the end products were:

| Processed cheese mass | | | Endproduct | |
|---|---|---|---|---|
| Example | 1 | 2 | 1 | 2 |
| Water activity | 0.95 | 0.95 | 0.92 | 0.92 |
| Moisture (%) | 37.4 | 41.0 | 34.7 | 38.8 |
| Fat (%) | 34.0 | 27.5 | 31.5 | 25.5 |
| Dry Matter (%) | 62.6 | 59.0 | 65.3 | 61.2 |
| Fat in dry matter (%) | 54.3 | 46.6 | 48.2 | 41.7 |
| pH | 5.3 | 5.2 | 5.4 | 5.3 |

The twisted casing at the end of the sausages could easily be untwisted just using the fingers and both products could then easily be pushed out of their casings. Upon eating, the products didn't feel thick or sticky in the mouth. They had a clearly perceptible skin which was judged to be about 1 mm thick and which was felt to make a positive contribution to the pleasure of biting in the product and to the mouthfeel of the product. Both products were overall liked, the product of example 1 being preferred.

### Example 3 and 4

### Recipe: (parts by weight)

| Example | 3 | 4 |
|---|---|---|
| Cheddar (10 weeks ripening) | 45.4 | 45.4 |
| Cheddar alternative, (all butter fat replaced by vegetable oil comprising palm oil, 25 weeks ripening) | 45.4 | - |
| Cheddar alternative, (all butter fat replaced by vegetable oil, comprising palm oil, 30 weeks ripening) | - | 45.4 |
| Emulsifying salts | 2.6 | 2.6 |
| pH correcting salts | 0.4 | 0.4 |
| Starch | 1.8 | 1.8 |
| Spice mix | 3.4 | 3.4 |
| Sodiumchloride | 0.9 | 0.9 |
| Color | 0.1 | 0.1 |

Water is added on top to the above described mix in an amount of 10 parts by weight. The product was prepared by the method outlined above.

Results of analyses of the end product of example 3 were:

| | |
|---|---|
| Water activity | 0.9 |
| Moisture content | 31% |
| Fat | 32% |
| Dry matter | 69% |
| Fat in dry matter | 46% |
| pH | 5.5 |

### Example 5

Example 1 was repeated except that as cheese Mozzarella cheese was used and that on top 0.5 parts by weight of cooking salt were added to the product.

### Example 6 and 7

Example 1 was repeated except that in example 6, 40 parts of each of the Cheddar and the Cheddar alternative had only been ripened for 1 week, while in example 7, 30 parts of each of the 2 cheeses had been ripened for 1 week and 5 parts of each of the 2 cheeses had been ripened for 30 weeks. Furthermore, to the recipe of example 7, on top 0.5 parts by weight of cooking salt were added.

### Example 8-10

Example 1 was repeated except that to the recipe on top, 3 parts by weight of calcium caseinate (ex. 8), sodium caseinate (ex 9) or rennet casein (ex 10) were added. In addition, in examples 9 and 10 also 0.5 parts by weight of cooking salt were included. Good products were obtained in all three cases.

### Example 11

Example 1 was repeated except that the cheese was replaced with Gruyere cheese that on top 0.5 parts by weight of cooking salt were added.

### Example 12

Example 1 was repeated except that 10 parts of the Cheddar were replaced with 10 parts Parmesan, and that on top 0.5 parts by weight cooking salt were added. The resulting product was crumbly and had a more pronounced taste and flavour than the product of example 1.

### Examples 13-14

Example 1 was repeated except that increased fat cheese alternative was added and that on top 0.5 parts by weight of cooking salt was added, that only 3 parts of the emulsifying salts were used and that either 2 parts of fully hardened palm oil (ex 13) or 2 parts of butterfat (ex 14) were added. The resulting products were both good.

### Example 15-16

Example 1 was repeated except that on top 0.5 parts by weight of cooking salt were added and that either 1 part by weight of egg white powder (ex 13) or 1 part by weight of tapioca starch (Tapiocaline ® ex Tipiak) were added on top. Both products were good. The texture of example 16 was found to be even better than that of example 1.

### Examples 17-19

Example 7 was repeated except that 39 parts of Cheddar and 58 parts of Cheddar alternative was used while retaining the distribution of degree of ripening (i.e. 60% ripened 1 week, 30% ripened 10 weeks and 10% of the cheese ripened 30 weeks), 1 part by weight of cooking salt was used instead of 0.5 parts by weight and that as emulsifying salts were used:
- for ex. 17 :: 1.6 parts by weight S230 and 0.8 parts by weight Joha C special (a mixture of E452 and E339)
- for ex. 18 :: 2.4 parts by weight Joha C Special (a mixture of E452 and E339 ex Joha, Ladenburg, Germany)
- for ex. 19 :: 2.4 parts by weight Joha S9 (a mixture of E452/ e.g. E339 ex Joha, Ladenburg, Germany)

### Comparative example A

Example 1 was repeated except that no drying was applied while smoking so that substantially no weight loss occurred during the smoking. The resulting product could not be pushed from its casing. The casing had to be cut and torn off. The product was judged to be rather thick and sticky in the mouth like conventional processed cheese.

## Claims

1. Processed cheese snack product in a moisture permeable casing which subsequent to filling of processed cheese mass into the casing has been dried to cause a weight loss of the processed cheese mass of 1-25%.

2. Snack product according to claim 1 wherein the casing is twist linking.

3. Snack product according to claim 2 wherein the casing is a cellulose casing.

4. Snack product according to any one of claims 1-3 wherein the weight loss is 2-20%, preferably 3-17%, most preferred 3-15%.

5. Snack product according to any one of claims 1-4 having the shape of sausage.

6. Snack product according to anyone of claims 1-5 having a water activity of 0.82-0.96, preferably of 0.86-0.94 especially of 0.88-0.92.

7. Snack product according to anyone of claims 1-6 **characterized in that** it is smoked.

8. Process for preparing a snack product according to anyone of claims 1-7, comprising:
A. preparing a processed cheese mass
B. filling the processed cheese mass into a moisture permeable casing, and
C. drying the filled casing to cause a weightloss of the processed cheese mass of 1-25%

9. Process according to claim 8 wherein the processed cheese mass is prepared using cheese 30-100% of which is renneted cheese that has been ripened for at least 5 weeks.

10. Process according to claim 8 or claim 9 wherein the processed cheese mass is prepared using cheese the fat of which consists for 20-80% of vegetable fat.

11. Process according to claim 10 wherein the processed cheese mass is prepared using a mixture of cheddar cheese that has been ripened for at least 10 weeks and a cheddar cheese alternative that has been ripened for at least 20 weeks.

12. Process according to any one of claims 8-11 wherein the filled casing is treated in an acid bath prior to drying.

## Patentansprüche

1. Schmelzkäseimbißprodukt in einer feuchtigkeitsdurchlässigen Hülle, das nach dem Füllen von Schmelzkäsemasse in die Hülle getrocknet wurde, um einen Gewichtsverlust der Schmelzkäsemasse von 1 bis 25% zu bewirken.

2. Imbißprodukt nach Anspruch 1, worin die Hülle verdrillt verknüpfend ist.

3. Imbißprodukt nach Anspruch 2, worin die Hülle eine Cellulosehülle darstellt.

4. Imbißprodukt nach irgendeinem der Ansprüche 1 bis 3, worin der Gewichtsverlust 2 bis 20%, bevorzugt 3 bis 17%, insbesondere bevorzugt 3 bis 15% beträgt.

5. Imbißprodukt nach irgendeinem der Ansprüche 1 bis 4 mit der Form von Wurst.

6. Imbißprodukt nach irgendeinem der Ansprüche 1 bis 5 mit einer Wasseraktivität von 0,82 bis 0,96, bevorzugt 0,86 bis 0,94, insbesondere von 0,88 bis 0,92.

7. Imbißprodukt nach irgendeinem der Ansprüche 1 bis 6, **dadurch gekennzeichnet, daß** es geräuchert ist.

8. Verfahren zur Herstellung eines Imbißprodukts nach irgendeinem der Ansprüche 1 bis 7, umfassend:
A. Herstellen einer Schmelzkäsemasse;
B. Füllen der Schmelzkäsemasse in eine feuchtigkeitsdurchlässige Hülle und
C. Trocknen der gefüllten Hülle, um einen Gewichtsverlust der Schmelzkäsemasse von 1 bis 25% zu bewirken.

9. Verfahren nach Anspruch 8, worin die Schmelzkäsemasse unter Verwendung von Käse hergestellt wird, von dem 30 bis 100% Labkäse darstellen, der mindestens 5 Wochen gereift wurde.

10. Verfahren nach Anspruch 8 oder Anspruch 9, worin die Schmelzkäsemasse unter Verwendung von Käse hergestellt wird, dessen Fett zu 20 bis 80% aus Pflanzenfett besteht.

11. Verfahren nach Anspruch 10, worin die Schmelzkäsemasse unter Verwendung einer Mischung von Cheddarkäse hergestellt wird, die mindestens 10 Wochen gereift wurde, sowie einer Cheddarkäse-Alternative, die mindestens 20 Wochen gereift wurde.

12. Verfahren nach mindestens einem der Ansprüche 8 bis 11, worin die gefüllte Hülle vor dem Trocknen in einem Säurebad behandelt wird.

## Revendications

1. Produit de snack de fromage fondu dans un emballage perméable à l'humidité qui, une fois la masse de fromage fondu versée dans l'emballage, est séché afin de subir une perte de poids de la masse de fromage fondu de 1 - 25 %.

2. Produit de snack selon la revendication 1, dans lequel l'emballage est lié par torsion.

3. Produit de snack selon la revendication 2, dans lequel l'emballage est un emballage en cellulose.

4. Produit de snack selon l'une quelconque des revendications 1 à 3, dans lequel la perte de poids est de 2 à 20 %, de préférence de 3 à 17 %, de la façon la plus préférentielle de 3 à 15 %.

5. Produit de snack selon l'une quelconque des revendications 1 à 4, ayant la forme d'une saucisse.

6. Produit de snack selon l'une des revendications 1 à 5, ayant une activité de l'eau de 0,82 à 0,96, de préférence de 0,86 à 0,94, plus spécialement de 0,88 à 0,92.

7. Produit de snack selon l'une quelconque des revendications 1 à 6, **caractérisé en ce qu'**il est fumé.

8. Procédé de préparation d'un produit de snack selon l'une quelconque des revendications 1 à 7, comprenant les étapes consistant à :
A. préparer une masse de fromage fondu ;
B. verser la masse de fromage fondu dans un emballage perméable à l'humidité ; et
C. sécher l'emballage rempli pour entraîner une perte de poids de la masse de fromage fondu de 1 - 25 %.

9. Procédé selon la revendication 8, dans lequel la masse de fromage fondu est préparée en utilisant du fromage dont 30 - 100 % est du fromage présuré ayant mûri pendant au moins 5 semaines.

10. Procédé selon la revendication 8 ou la revendication 9, dans lequel la masse de fromage fondu est préparée en utilisant du fromage dont la matière grasse est composée à 20 - 80 % de matière grasse végétale.

11. Procédé selon la revendication 10, dans lequel la masse de fromage fondu est préparée en utilisant un mélange de fromage de Chèddar ayant mûri pendant au moins 10 semaines et un produit de substitution au fromage de Cheddar ayant mûri pendant au moins 20 semaines.

12. Procédé selon l'une quelconque des revendications 8 à 11, dans lequel l'emballage rempli est traité dans un bain d'acide avant le séchage.
